(19) Europäisches Patentamt
European Patent Office
Office européen des brevets

(11) **EP 3 252 942 A1**

(12) **EUROPEAN PATENT APPLICATION**
published in accordance with Art. 153(4) EPC

(43) Date of publication:
06.12.2017 Bulletin 2017/49

(51) Int Cl.:
*H02P 25/08* (2016.01)  *H02P 6/18* (2016.01)

(21) Application number: 15880129.0

(22) Date of filing: 09.12.2015

(86) International application number:
PCT/JP2015/084540

(87) International publication number:
WO 2016/121237 (04.08.2016 Gazette 2016/31)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
MA MD

(30) Priority: 28.01.2015 JP 2015014734

(71) Applicant: Kabushiki Kaisha Toshiba
Minato-ku
Tokyo 105-8001 (JP)

(72) Inventors:
• SHIGETA, Tomoaki
Tokyo 105-8001 (JP)
• TANIGUCHI, Shun
Tokyo 105-8001 (JP)
• SUZUKI, Kentaro
Tokyo 105-8001 (JP)
• YUUKI, Kazuaki
Tokyo 105-8001 (JP)

(74) Representative: Awapatent AB
P.O. Box 11394
404 28 Göteborg (SE)

(54) **INVERTER CONTROL DEVICE AND MOTOR DRIVE SYSTEM**

(57) An inverter control device according to an embodiment includes an inverter main circuit, a current instruction generator, a voltage instruction generator, an estimator, a high-frequency wave superimposer. The inverter main circuit is electrically connectable to a predetermined rotational drive target. The current instruction generator generates a current instruction. The voltage instruction generator generates a voltage instruction causing a current output from the inverter main circuit to be equal to the current instruction. The estimator calculates an estimation rotational phase angle of the rotational drive target. The high-frequency wave superimposer superimposes a high-frequency wave on the current instruction or the voltage instruction according to a relation between a feature amount of the rotational drive target and a threshold.

FIG.1

EP 3 252 942 A1

## Description

Field

The embodiments of the present invention relate to an inverter control device.

Background

Conventionally, in sensorless control on a rotational phase angle of a permanent magnet synchronous motor (PMSM) or a synchronous reluctance motor (SynRM), a method of estimating the rotational phase angle using an induced voltage is employed in a high-speed area. However, in a PMSM or a SynRM having a small magnetic flux, there is a problem that estimation accuracy of the rotational phase angle is deteriorated because an induced voltage occurring due to an interlinkage magnetic flux is low in a low load state even in a high-speed area.

Citation List

Patent Literature

[Patent Literature 1]    Japanese Patent Application Laid-open No. 2011-244655
[Patent Literature 2]    Japanese Patent Application Laid-open No. 2002-058294
[Patent Literature 3]    Japanese Patent Application Laid-open No. 2009-153347
[Patent Literature 4]    Japanese Patent Application Laid-open No. 2010-154598

Summary

Technical Problem

An object is to provide an inverter control device and a motor drive system that can accurately estimate a rotational phase angle of a motor.

Solution to Problem

An inverter control device according to an embodiment includes an inverter main circuit, a current instruction generator, a voltage instruction generator, an estimator, a high-frequency wave superimposer. The inverter main circuit is electrically connectable to a predetermined rotational drive target. The current instruction generator generates a current instruction. The voltage instruction generator generates a voltage instruction causing a current output from the inverter main circuit to be equal to the current instruction. The estimator calculates an estimation rotational phase angle of the rotational drive target. The high-frequency wave superimposer superimposes a high-frequency wave on the current instruction or the voltage instruction according to a relation between a feature amount of the rotational drive target and a threshold.

Brief Description of Drawings

[FIG. 1] FIG. 1 is a diagram illustrating a configuration of a motor drive system according to a first embodiment.
[FIG. 2] FIG. 2 is an explanation diagram of the three-phase fixed coordinate system and the dcqc-axis rotating coordinate system.
[FIG. 3] FIG. 3 is a diagram illustrating a configuration of the current instruction generator shown in figure 1.
[FIG. 4] FIG. 4 is a diagram illustrating an inductance table shown in figure 3.
[FIG. 5] FIG. 5 is a diagram illustrating a current-phase-angle table shown in figure 3.
[FIG. 6] FIG. 6 is a diagram illustrating a configuration of a voltage instruction generator shown in figure 1.
[FIG. 7] FIG. 7 is a diagram illustrating a configuration of an angular velocity and rotational-phase-angle estimator shown in figure 1.
[FIG. 8] FIG. 8 is a diagram illustrating characteristics of conventional PMSM and SynRM at the time of a large load.
[FIG. 9] FIG. 9 is a diagram illustrating characteristics of conventional PMSM and SynRM at the time of a small load.

[FIG. 10] FIG. 10 is a diagram illustrating an example of a switching method of a high-frequency superimposing.

[FIG. 11] FIG. 11 is a diagram illustrating an example of a configuration of the high-frequency wave superimposer shown in figure 1.

[FIG. 12] FIG. 12 is a diagram illustrating an example of a determination part shown in FIG. 11.

[FIG. 13] FIG. 13 is a diagram illustrating an example of a determination part shown in FIG. 11.

[FIG. 14] FIG. 14 is a diagram illustrating a configuration of a high-frequency wave detector shown in FIG. 7.

[FIG. 15] FIG. 15 is an explanation diagram of an operation of a bandpass filter shown in FIG. 13.

[FIG. 16] FIG. 16 is a diagram illustrating an operation of a FFT analyzer shown in FIG. 13.

[FIG. 17] FIG. 17 is a diagram illustrating an example of high-frequency currents idc' and iqc'.

[FIG. 18] FIG. 18 is a diagram of an example operation of a high-frequency wave superimposer shown in FIG. 11.

[FIG. 19] FIG. 19 is a diagram illustrating a configuration of a modification of the high-frequency wave superimposer.

[FIG. 20] FIG. 20 is a diagram illustrating an example operation of the high-frequency wave superimposer shown in FIG. 19.

[FIG. 21] FIG. 21 is a diagram illustrating another example operation of the high-frequency wave superimposer shown in FIG. 19.

[FIG. 22] FIG. 22 is a diagram illustrating a configuration of a motor drive system according to a second embodiment.

[FIG. 23] FIG. 23 is a diagram illustrating a configuration of a voltage instruction generator shown in figure 22.

[FIG. 24] FIG. 24 is a diagram illustrating a configuration of a control method switcher shown in figure 22.

[FIG. 25] FIG. 25 is a diagram illustrating a configuration of an angular velocity and rotational-phase-angle estimator shown in figure 22.

[FIG. 26] FIG. 26 is an explanation diagram of an operation of an inverter control device shown in figure 22.

Description of Embodiments

Embodiments of the present invention will be described below with reference to the accompanying drawings.

(First embodiment)

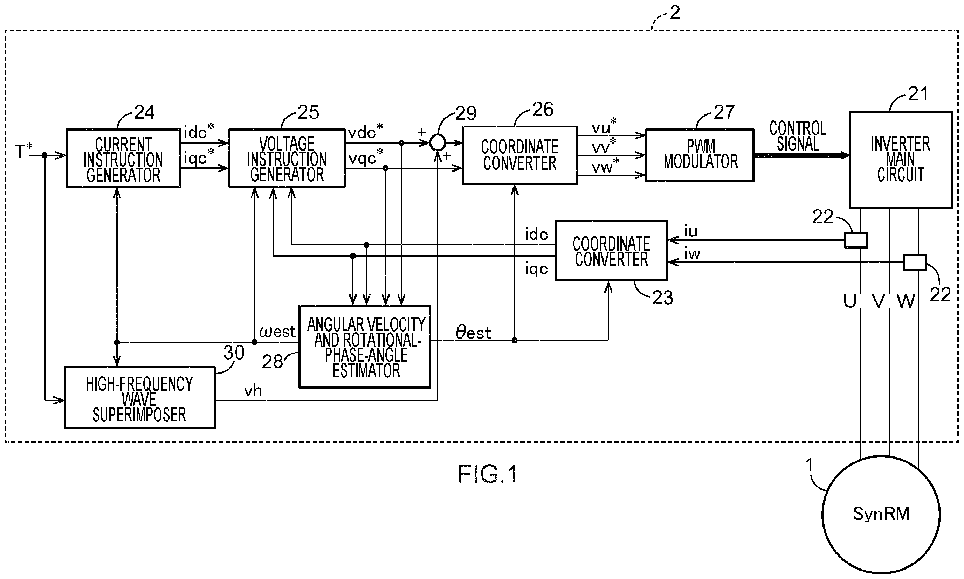

An inverter control device according to a first embodiment is explained with reference to FIGS. 1 to 21. FIG. 1 is a diagram illustrating a configuration of a motor drive system according to the present embodiment. As illustrated in FIG. 1, the motor drive system according to the present embodiment includes a motor 1 and an inverter control device 2 (hereinafter, "control device 2").

The motor 1 is a rotational drive target of the control device 2 and is connected to the control device 2. A case where the motor 1 is a synchronous reluctance motor (hereinafter, "SynRM 1") is explained below as an example. The SynRM 1 includes a stator and a rotor. The stator has three excitation phases (a U phase, a V phase, and a W phase). The stator generates a magnetic field with three-phase AC currents flowing in the respective excitation phases. The rotor has no permanent magnet and is rotated by a magnetic interaction with the magnetic field generated by the stator.

The control device 2 controls a rotational phase angle θ of the SynRM 1 in a rotational-phase-angle sensorless manner. As illustrated in FIG. 1, the control device 2 according to the present embodiment includes an inverter main circuit 21, current detectors 22, a coordinate converter 23, a current instruction generator 24, a voltage instruction generator 25, a coordinate converter 26, a PWM modulator 27, an angular velocity and rotational-phase-angle estimator 28, an adder 29, and a high-frequency wave superimposer 30.

The inverter main circuit 21 is a circuit including switching elements. The inverter main circuit 21 switches between ON and OFF of the switching elements to convert power from a power supply (not illustrated) to AC power and supply the AC power to the SynRM 1. To the inverter main circuit 21, control signals for controlling ON and OFF of the respective switching elements are input from the PWM modulator 27.

The current detectors 22 detect currents of two or three phases among the three-phase AC currents flowing through the stator of the SynRM 1, respectively. FIG. 1 illustrates a configuration detecting currents iu and iw of two phases (the U phase and the W phase). The three-phase AC currents flowing through the stator of the SynRM 1 can alternatively be obtained by computing based on a DC-side current of the inverter main circuit 21.

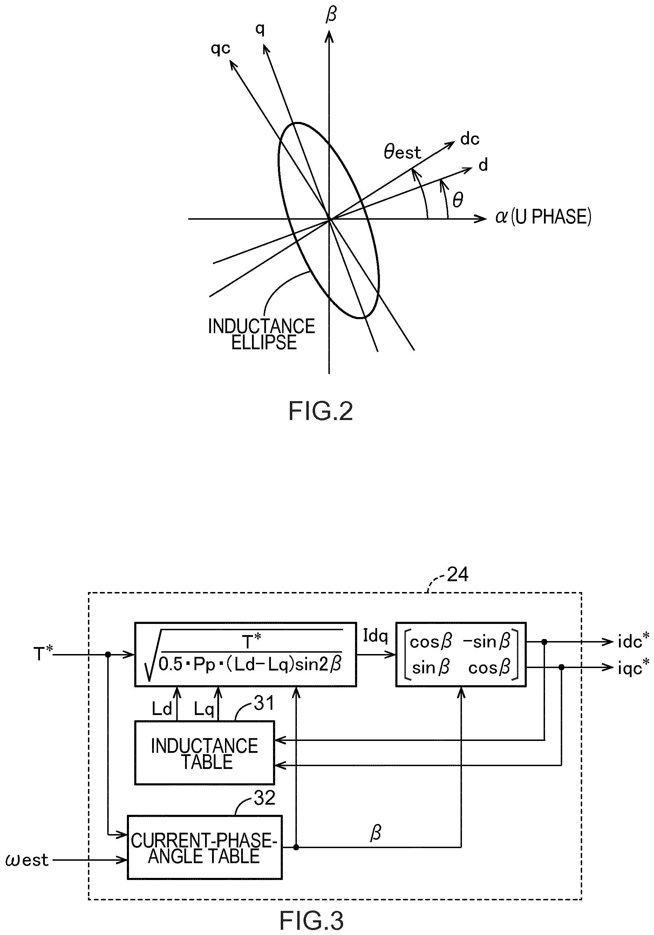

The coordinate converter 23 performs coordinate conversion of the currents iu and iw detected by the current detectors 22 from a three-phase fixed coordinate system to a dcqc-axis rotating coordinate system to generate currents idc and iqc. The current idc is a dc-axis component of the current flowing through the stator and the current iqc is a qc-axis component of the current flowing through the stator. The three-phase fixed coordinate system and the dcqc-axis rotating coordinate system are explained below with reference to FIG. 2.

As illustrated in FIG. 2, the three-phase fixed coordinate system is a fixed coordinate system including an α-axis and a β-axis. In FIG. 2, the α-axis is set in a U-phase direction and the β-axis is set in a direction perpendicular to the α-axis. The currents iu and iw detected by the current detectors 22 are represented on this three-phase fixed coordinates.

In contrast, the dcqc-axis rotating coordinate system is a rotating coordinate system including a dc-axis and a qc-axis. The dc-axis is set in a direction estimated by the control device 2 as a d-axis direction (a direction in which inductance of the rotor has a smallest value) and the qc-axis is set in a direction estimated by the control device 2 as a q-axis direction (a direction in which the inductance of the rotor has a largest value). An inductance ellipse in FIG. 2 indicates the inductance of the rotor.

As illustrated in FIG. 2, the dcqc axes do not always coincide with the dq axes. An actual rotational phase angle $\theta$ of the rotor is represented by an angle from the $\alpha$-axis to the d-axis. An estimation rotational phase angle $\theta$est of the rotor, estimated by the control device 2, is represented by an angle from the $\alpha$-axis to the dc-axis. In the following descriptions, an error between the rotational phase angle $\theta$ and the estimation rotational phase angle $\theta$est is referred to as "error $\Delta\theta$".

The coordinate converter 23 can convert the three-phase fixed coordinate system to the dcqc-axis rotating coordinate system using the estimation rotational phase angle $\theta$est output by the angular velocity and rotational-phase-angle estimator 28.

The current instruction generator 24 generates current instructions idc* and iqc* based on a torque instruction T* and an estimation angular velocity $\omega$est. The torque instruction T* is a torque value to be generated by the rotor. In the present embodiment, the torque instruction T* is assumed to be input from an external device. The estimation angular velocity $\omega$est is a angular velocity $\omega$ of the rotor estimated by the control device 2. The current instruction idc* is a dc-axis component of a current flowing through the SynRM 1. The current instruction iqc* is a qc-axis component of the current flowing through the SynRM 1.

FIG. 3 is a diagram illustrating a configuration of the current instruction generator 24. As illustrated in FIG. 3, the current instruction generator 24 includes an inductance table 31 and a current-phase-angle table 32.

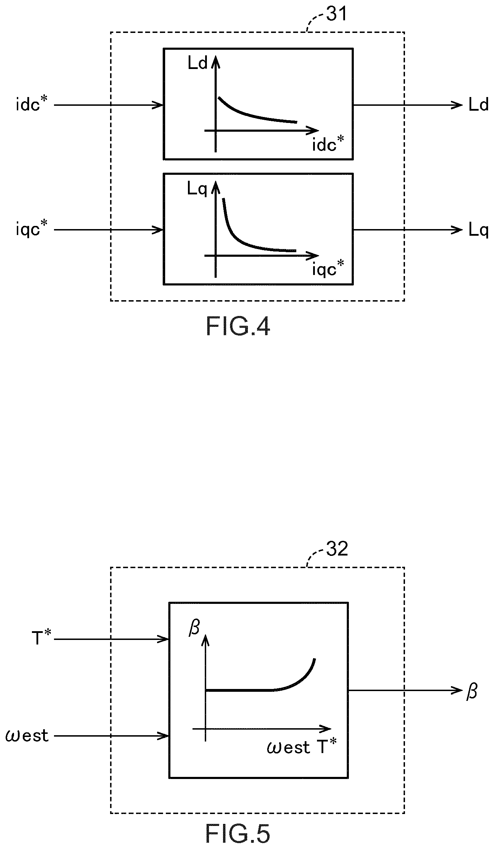

The inductance table 31 is a table indicating relations between the current instruction and the inductance. The inductance table 31 includes a table indicating a relation between the current instruction idc* and an inductance Ld, and a table indicating a relation between the current instruction iqc* and an inductance Lq as illustrated in FIG. 4. The inductance Ld is a d-axis component of the inductance of the SynRM 1 and the inductance Lq is a q-axis component of the inductance of the SynRM 1. The inductance table 31 can receive feedbacks of the current instructions idc* and iqc* and output the inductances Ld and Lq corresponding to the current instruction idc* and iqc*, respectively.

The current-phase-angle table 32 is a table indicating a relation between the torque instruction T* and an estimation angular velocity $\omega$est, and a current phase angle $\beta$ as illustrated in FIG. 5. The current phase angle $\beta$ is a phase angle of a current vector corresponding to the current flowing through the stator. The current-phase-angle table 32 receives the torque instruction T* and the estimation angular velocity $\omega$est as inputs, and outputs the current phase angle $\beta$ corresponding to the torque instruction T* and the estimation angular velocity $\omega$est.

The current instruction generator 24 first calculates a current Idq based on the torque instruction T*, the inductances Ld and Lq, and the current phase angle $\beta$. The current Idq is a magnitude of the current flowing through the stator. The current Idq is calculated by the following expression.

[Formula 1]

$$I_{dq} = \sqrt{\frac{T^*}{0.5 \times P \times (L_d - L_q)\sin 2\beta}} \quad \cdots (1)$$

In the expression (1), P is the number of pole pairs in the SynRM 1.

Next, the current instruction generator 24 generates the current instructions idc* and iqc* from the current Idq and the current phase angle $\beta$. The current instruction idc* is a dc-axis component of a current vector, the magnitude of which is the current Idq and the phase angle of which is the current phase angle $\beta$. The current instruction iqc* is a qc-axis component of the current vector, the magnitude of which is the current Idq and the phase angle of which is the current phase angle $\beta$.

The calculation method of the current instructions idc* and iqc* is not limited to that described above and any method can be arbitrarily selected.

The voltage instruction generator 25 (a current controller) generates voltage instruction vdc* and vqc* based on the currents idc and iqc, the current instructions idc* and iqc*, and the estimation angular velocity $\omega$est to cause a current output from the inverter main circuit 21 (that is, a current flowing in the SynRM 1) to correspond to the current instructions idc* and iqc*. The voltage instruction vdc* is a dc-axis component of a voltage to be applied to the stator of the SynRM 1. The voltage instruction vqc* is a qc-axis component of the voltage to be applied to the stator of the SynRM 1.

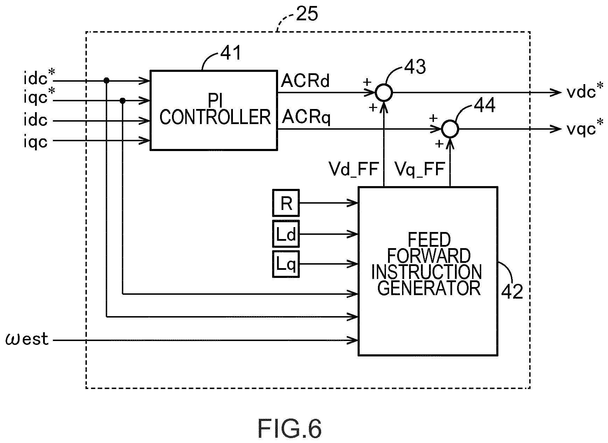

FIG. 6 is a diagram illustrating a configuration of the voltage instruction generator 25. As illustrated in FIG. 6, the voltage instruction generator 25 includes a PI controller 41, a feedforward instruction generator 42, and adders 43 and 44.

The PI controller 41 receives the currents idc and iqc and the current instructions idc* and iqc* as inputs and calculates voltages ACRd and ACRq, at which the currents idc and iqc become the current instructions idc* and iqc* by PI control, respectively. The voltages ACRd and ACRq are voltages generated according to the error Δθ, and both voltages become zero when a set motor parameter coincides with a true value and the error Δθ is zero. The voltages ACRd and ACRq output from the PI controller 41 are input to the adders 43 and 44, respectively.

The feedforward instruction generator 42 receives the current instructions idc* and iqc* and the estimation angular velocity ωest as inputs and generates feedforward voltages Vd_FF and Vq_FF. The feedforward voltages Vd_FF and Vq_FF are calculated, for example, by the following expression.

[Formula 2]

$$\begin{bmatrix} v_{d\_FF} \\ v_{q\_FF} \end{bmatrix} = \begin{bmatrix} R & -\omega_{est}L_q \\ \omega_{est}L_d & R \end{bmatrix} \begin{bmatrix} i_{dc}^* \\ i_{qc}^* \end{bmatrix} \cdots (2)$$

In the expression (2), R is a winding resistance of the stator. The feedforward voltages Vd_FF and Vq_FF output from the feedforward instruction generator 42 are input to the adders 43 and 44, respectively.

The adder 43 adds the voltage ACRd and the feedforward voltage Vd_FF to generate the voltage instruction vdc*. The adder 44 adds the voltage ACRq and the feedforward voltage Vq_FF to generate the voltage instruction vqc*.

The coordinate converter 26 performs coordinate conversion of the voltage instruction vdc* output by the voltage instruction generator 25 and a voltage output by the adder 29 from the dcqc-axis rotating coordinate system into the three-phase fixed coordinate system. The coordinate converter 26 converts the dcqc-axis rotating coordinate system into the three-phase fixed coordinate system by using the estimation rotational phase angle θest, similarly to the coordinate converter 23.

Voltages obtained by the coordinate conversion of the coordinate converter 26 are hereinafter referred to as "voltage instructions vu*, vv*, and vw*". The voltage instruction vu* is a voltage to be applied to the U-phase of the stator, the voltage instruction vv* is a voltage to be applied to the V-phase of the stator, and the voltage instruction vw* is a voltage to be applied to the W-phase of the stator.

The PWM modulator 27 modulates the voltage instructions vu*, vv*, and vw* by PWM (Pulse-Width Modulation) using a triangle wave to generate binary control signals corresponding to ON or OFF of the respective switching elements of the inverter main circuit 21. The PWM modulator 27 inputs the generated control signals to the inverter main circuit 21.

The angular velocity and rotational-phase-angle estimator 28 (hereinafter, "estimator 28") estimates an angular velocity ω of the SynRM 1 and a rotational phase angle θ thereof based on the voltage instructions vdc* and vqc* and the currents idc and iqc to calculate the estimation angular velocity ωest and the estimation rotational phase angle θest. The estimation angular velocity ωest output by the estimator 28 is input to the current instruction generator 24, the voltage instruction generator 25, and the high-frequency wave superimposer 30. The estimation rotational phase angle θest is input to the coordinate converters 23 and 26 and is used for coordinate conversion.

The estimator 28 according to the present embodiment estimates the angular velocity ω and the rotational phase angle θ using an extended induced voltage. An estimation method using an extended induced voltage is explained below.

When the error Δθ between the rotational phase angle θ and the estimation rotational phase angle θest is zero, that is, when the dq-axis and the dcqc-axis coincide with each other, the following voltage equation holds.

[Formula 3]

$$\begin{bmatrix} v_d \\ v_q \end{bmatrix} = \begin{bmatrix} R + pL_d & -\omega L_q \\ \omega L_d & R + pL_q \end{bmatrix} \begin{bmatrix} i_d \\ i_q \end{bmatrix} \cdots (3)$$

In the expression (3), vd is a d-axis component of a voltage to be applied to the SynRM 1, vq is a q-axis component of the voltage to be applied to the SynRM 1, id is a d-axis component of a current flowing in the SynRM 1, iq is a q-axis component of the current flowing in the SynRM 1, and p is a differential operator (d/dt).

In contrast thereto, when an error Δθ occurs and the dq-axis and the dcqc-axis are not aligned with each other, the following voltage equation holds.

[Formula 4]

$$\begin{bmatrix} v_{dc} \\ v_{qc} \end{bmatrix} = \begin{bmatrix} R - \omega L_{dqc} & -\omega L_{qc} \\ \omega L_{dc} & R + \omega L_{dqc} \end{bmatrix} \begin{bmatrix} i_{dc} \\ i_{qc} \end{bmatrix} + p \begin{bmatrix} L_{dc} & L_{dqc} \\ L_{dqc} & L_{qc} \end{bmatrix} \begin{bmatrix} i_{dc} \\ i_{qc} \end{bmatrix} \quad \cdots \cdot (4)$$

$$L_{dc} = L_0 + L_1 \cos 2\Delta\theta \quad \cdots \cdot (5)$$

$$L_{qc} = L_0 - L_1 \cos 2\Delta\theta \quad \cdots \cdot (6)$$

$$L_0 = \frac{L_d + L_q}{2}, \quad L_1 = \frac{L_d - L_q}{2} \quad \cdots \cdot (7)$$

$$L_{dqc} = L_1 \sin 2\Delta\theta \quad \cdots \cdot (8)$$

In the expression (4), vdc is a dc-axis component of a voltage to be applied to the SynRM 1, and vqc is a qc-axis component of the voltage to be applied to the SynRM 1.

From the expressions (4) to (8), inductances included in respective terms of the expression (4) change depending on the error $\Delta\theta$. Therefore, it is difficult to obtain $\Delta\theta$ directly from the expressions (3) and (4). Accordingly, when the expression (3) is rewritten with an extended induced voltage representation, the expression (3) is represented as follows.

[Formula 5]

$$\begin{bmatrix} v_d \\ v_q \end{bmatrix} = \begin{bmatrix} R + pL_q & -\omega L_d \\ \omega L_d & R + pL_q \end{bmatrix} \begin{bmatrix} i_d \\ i_q \end{bmatrix} + \begin{bmatrix} (L_d - L_q)(pi_d + \omega i_q) \\ 0 \end{bmatrix} \quad \cdots \cdot (9)$$

When similarly rewritten with the extended induced voltage representation, the expressions (4) to (8) are represented as follows.

[Formula 6]

$$\begin{bmatrix} v_d \\ v_q \end{bmatrix} = \begin{bmatrix} R + pL_q & -\omega L_d \\ \omega L_d & R + pL_q \end{bmatrix} \begin{bmatrix} i_d \\ i_q \end{bmatrix} + \begin{bmatrix} e_{dc} \\ e_{qc} \end{bmatrix} \quad \cdots \cdot (10)$$

$$\begin{bmatrix} e_{dc} \\ e_{qc} \end{bmatrix} = E_x \begin{bmatrix} \cos \Delta\theta \\ \sin \Delta\theta \end{bmatrix} \quad \cdots \cdot (11)$$

$$E_x = (L_d - L_q)(pi_d + \omega i_q) \quad \cdots \cdot (12)$$

A voltage Ex represented by the above expression (12) is referred to as an extended induced voltage.

When the expression (10) is deformed, the following expression is obtained.

[Formula 7]

$$\begin{bmatrix} e_{dc} \\ e_{qc} \end{bmatrix} = \begin{bmatrix} v_d \\ v_q \end{bmatrix} - \begin{bmatrix} R + pL_q & -\omega L_d \\ \omega L_d & R + pL_q \end{bmatrix} \begin{bmatrix} i_d \\ i_q \end{bmatrix} \quad \cdots (13)$$

Because the expression (11) and the expression (13) are equal, the following expression holds.
[Formula 8]

$$\begin{bmatrix} E_x \cos \Delta\theta \\ E_x \sin \Delta\theta \end{bmatrix} = \begin{bmatrix} v_{dc} \\ v_{qc} \end{bmatrix} - \begin{bmatrix} R + pL_q & -\omega L_d \\ \omega L_d & R + pL_q \end{bmatrix} \begin{bmatrix} i_d \\ i_q \end{bmatrix} \quad \cdots (14)$$

When respective terms of the expression (14) are divided, the following expression holds.
[Formula 9]

$$\frac{E_x \cos \Delta\theta}{E_x \sin \Delta\theta} = \tan \Delta\theta = \frac{v_{dc}^* - (R + pL_q)i_{dc}^* + \omega_{est}L_d i_{qc}^*}{v_{qc}^* - \omega_{est}L_d i_{dc}^* - (R + pL_q)i_{qc}^*} \quad \cdots (15)$$

Furthermore, the arctangent of the expression (15) is obtained as follows.
[Formula 10]

$$\Delta\theta = \tan^{-1}\left\{ \frac{v_{dc}^* - (R + pL_q)i_{dc}^* + \omega_{est}L_d i_{qc}^*}{v_{qc}^* - \omega_{est}L_d i_{dc}^* - (R + pL_q)i_{qc}^*} \right\} \quad \cdots (16)$$

The estimator 28 calculates the error Δθ based on the expression (16) and executes PLL control to set the error Δθ to zero, whereby the angular velocity ω can be estimated and the estimation angular velocity ωest can be calculated. The estimator 28 also can estimate the rotational phase angle θ and calculate the estimation rotational phase angle θest by integrating the estimation angular velocity ωest.

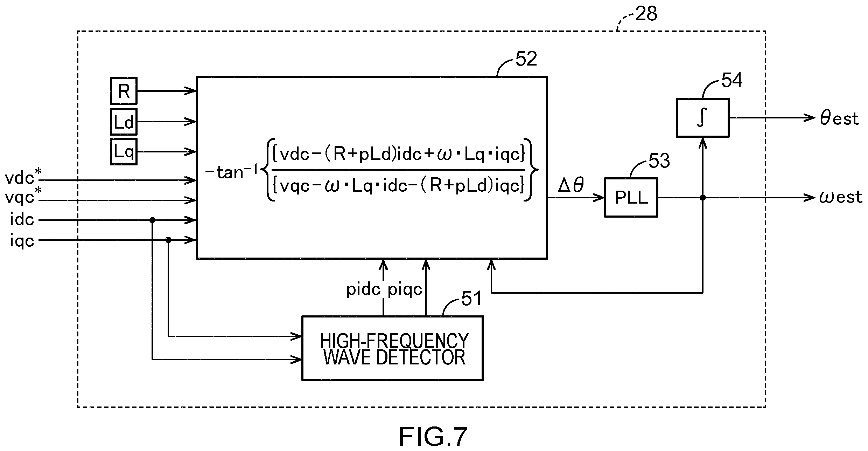

FIG. 7 is a diagram illustrating a configuration of the estimator 28 that estimates the angular velocity ω and the rotational phase angle θ by the method described above. As illustrated in FIG. 7, the estimator 28 includes a high-frequency wave detector 51, a Δθ calculator 52, a PLL controller 53, and an integrator 54.

The high-frequency wave detector 51 detects high-frequency components of the currents idc and iqc and calculates current derivative terms pidc and piqc. The current derivative terms pidc and piqc output by the high-frequency wave detector 51 are input to the Δθ calculator 52. The error Δθ calculated by the Δθ calculator 52 is input to the PLL controller 53. Details of the high-frequency wave detector 51 are described later.

The PLL controller 53 executes the PLL control to cause the error Δθ to be zero and calculates the estimation angular velocity ωest. The estimation angular velocity ωest output by the PLL controller 53 is input to the integrator 54.

The integrator 54 integrates the estimation angular velocity ωest and calculates the estimation rotational phase angle θest.

The adder 29 adds the voltage instruction vdc* output by the voltage instruction generator 25 and a high-frequency voltage vh output by the high-frequency wave superimposer 30. Accordingly, the high-frequency voltage vh is superimposed on the voltage instruction vdc*. The voltage instruction vdc* having the high-frequency voltage vh superimposed thereon is input to the coordinate converter 26.

The high-frequency wave superimposer 30 outputs the high-frequency voltage vh when a voltage amplitude instruction Vdqc* or power Pm of the SynRM 1 falls below a threshold. The voltage amplitude instruction Vdqc* in this case is a terminal voltage of the SynRM 1 set by the voltage instructions vdc* and vqc* and is represented as Vdqc*=(vdC*2+vqc*2)$^{1/2}$. The power Pm is a shaft output of the SynRM 1. The output high-frequency voltage vh is superimposed on the voltage instruction vdc* by the adder 29. The reason why the high-frequency voltage vh is superimposed on the voltage instruction vdc* is explained below.

As described above, the estimator 28 calculates the error Δθ using the extended induced voltage Ex and estimates the angular velocity ω and the rotational phase angle θ. However, when a load of the SynRM 1 is small, the extended induced voltage Ex of the expression (12) is small.

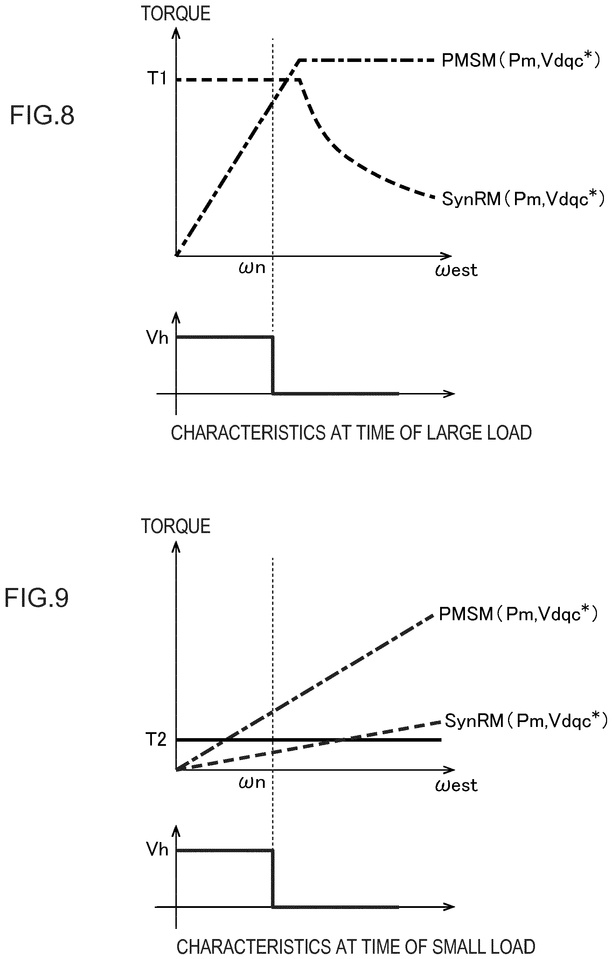

FIGS. 8 and 9 are diagrams illustrating characteristics of a torque, the power Pm, and the voltage amplitude instruction Vdqc* with respect to angular velocities of conventional PMSM and SynRM. FIG. 8 illustrates the characteristics at the time of a large load when the respective motors output a large torque. FIG. 9 illustrates the characteristics at the time of a small load when the respective motors output a small torque.

As illustrated in FIG. 8, the conventional PMSM and SynRM obtain a sufficient extended induced voltage Ex at the time of a large load. Therefore, a control device that controls the PMSM and the SynRM can continue stable control without causing the PMSM and the SynRM to step out even if superimposition of the high-frequency voltage vh on the voltage instruction vdc* is stopped at a certain angular velocity ωn used as a reference.

Furthermore, in the conventional PMSM, a magnetic voltage according to a rotating speed occurs and thus a relatively-large extended induced voltage Ex is obtained even at the time of a small load as illustrated in FIG. 9. Therefore, a control device that controls the PMSM can control the PMSM without causing step-out of the PMSM even if the superimposition of the high-frequency voltage vh on the voltage instruction vdc* is stopped at a certain angular velocity ωn as a reference.

In contrast thereto, the extended induced voltage Ex in the conventional SynRM becomes small at the time of a small load as illustrated in FIG. 9. This is as described above. Therefore, if the superimposition of the high-frequency voltage vh on the voltage instruction vdc* is stopped at a certain angular velocity ωn as a reference, a control device that controls the SynRM has a difficulty in estimating the rotational phase angle, which may lead to step-out of the SynRM or instability of the control.

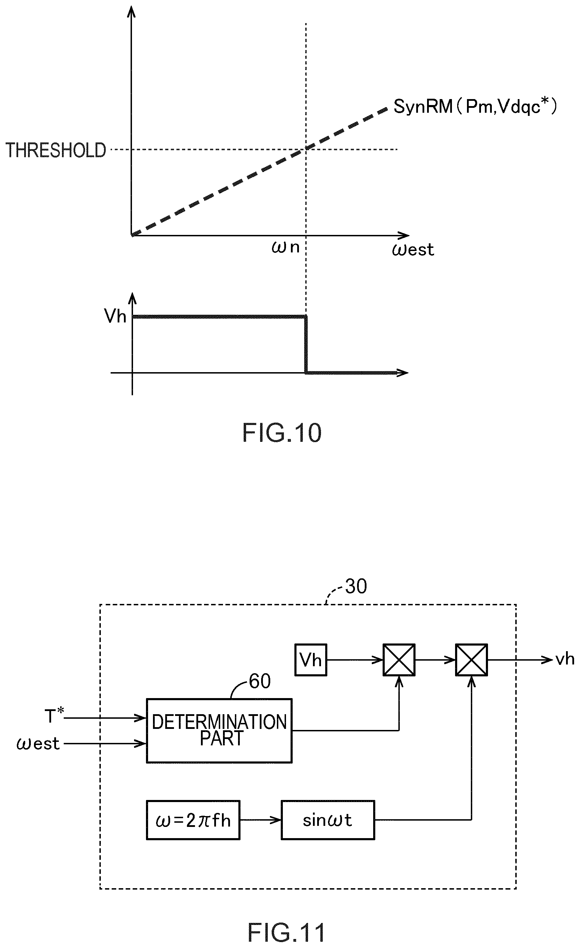

Accordingly, as illustrated in FIG. 10, the control device 2 according to the present embodiment superimposes the high-frequency voltage vh on the voltage instruction vdc* to increase the extended induced voltage Ex and stabilize the control of the SynRM 1 when the voltage amplitude instruction Vdqc* or the power Pm of the SynRM 1 falls below a threshold. When the high-frequency voltage vh is superimposed, the current derivative term of the dc-axis of the expression (4) is as follows when Δθ is considerably small.

[Formula 11]

$$pi_{dc} = \frac{1}{L_d L_q}\left(L_0 - L_1 \cos 2\Delta\theta\right)v_h = \frac{\left(\frac{L_d + L_q}{2} - \frac{L_d - L_q}{2}\right)}{L_d L_q}v_h = \frac{v_h}{L_d} \quad \cdots (1\,7)$$

When the current Idq is small, the extended induced voltage Ex of the expression (12) is as follows.

[Formula 12]

$$E_x = \left(L_d - L_q\right)pi_d \quad \cdots (1\,8)$$

From the expressions (17) and (18), the extended induced voltage Ex is represented as follows.

[Formula 13]

$$E_x = \left(L_d - L_q\right)\frac{v_h}{L_d} \quad \cdots (1\,9)$$

The expression (19) indicates that the extended induced voltage Ex is increased by superimposition of the high-frequency voltage vh. Therefore, the rotational phase angle θ can be estimated using the extended induced voltage Ex. The error Δθ is thus represented by the following expression.

[Formula 14]

$$\Delta\theta = \tan^{-1}\left\{\frac{v_{dc}{}^* + \omega_{est}L_d i_{qc}{}^*}{v_{qc}{}^* - \omega_{est}L_d i_{dc}{}^*}\right\} \quad \cdot \ \cdot \ \cdot \ (2\,0)$$

FIG. 11 is a diagram illustrating an example of a configuration of the high-frequency wave superimposer 30. The high-frequency wave superimposer 30 in FIG. 11 switches whether to perform high-frequency wave superimposition based on the power Pm of the SynRM 1. As illustrated in FIG. 11, the high-frequency wave superimposer 30 includes a determination part 60.

The determination part 60 determines whether to superimpose the high-frequency voltage vh based on the power Pm of the SynRM 1. The determination part 60 outputs a signal corresponding to a determination result. It is assumed hereinafter that the determination part 60 outputs zero (0) when determining that the extended induced voltage Ex is large, and outputs 1 when determining that the extended induced voltage Ex is small.

The high-frequency wave superimposer 30 does not output the high-frequency voltage vh when the determination part 60 determines that the extended induced voltage Ex is large (the determination part 60 outputs zero). In this case, the voltage instruction vdc* is input to the coordinate converter 26.

On the other hand, the high-frequency wave superimposer 30 outputs the high-frequency voltage vh when the determination part 60 determines that the load is small (the determination part 60 outputs 1). In this case, the voltage instruction vdc* having the high-frequency voltage vh added by the adder 29 is input to the coordinate converter 26. The high-frequency voltage vh is represented by the following expression.

[Formula 15]

$$v_h = V_h \sin \omega t = V_h \sin 2\pi f_h \quad \cdot \ \cdot \ \cdot \ (2\,1)$$

In the expression (21), Vh is an amplitude setting value and fh is a frequency setting value.

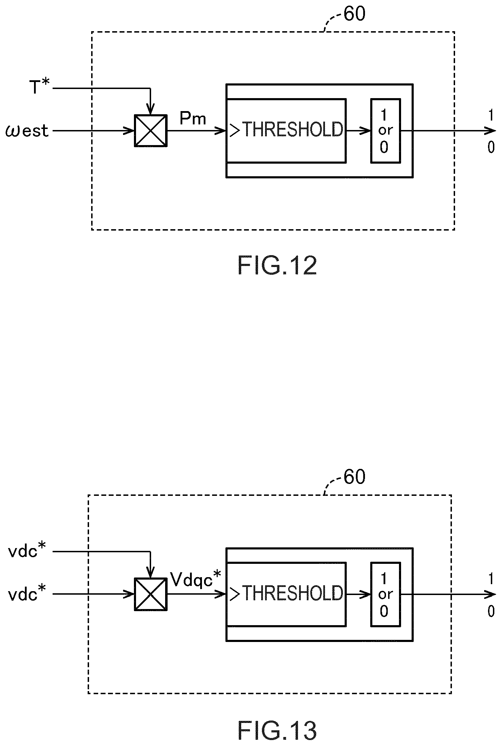

FIG. 12 is a diagram illustrating an example of the determination part 60 in FIG. 11. The determination part 60 determines whether the high-frequency wave superimposition is necessary based on the power Pm of the SynRM 1 as described above. Specifically, the determination part 60 calculates the power Pm of the SynRM 1 based on the torque instruction T* and the estimation angular velocity ωest and compares the power Pm with a predetermined threshold Pr. The determination part 60 determines that the load is small when the power Pm is smaller than the threshold Pr (Pm<Pr).

The threshold Pr is set to improve estimation accuracy of the angular velocity ω and the rotational phase angle θ. For example, when a minimum value that enables accurate estimation of the rotational phase angle θ using the extended induced voltage Ex is n, the extended induced voltage Ex corresponding to the threshold Pr in a case where the number of motor pole pairs is 1 is represented by the following expression.

[Formula 16]

$$E_x = \left(L_d - L_q\right)\frac{v_h}{L_d} \geq n \quad \cdot \ \cdot \ \cdot \ (2\,2)$$

The power Pm of the SynRM 1 is represented by the following expression.

[Formula 17]

$$P_m = \omega_{est}(L_d - L_q)i_d i_q \quad \cdot \ \cdot \ \cdot \ (2\,3)$$

Therefore, from the expressions (22) and (23), the threshold Pr satisfying the extended induced voltage minimum value n that enables accurate estimation of the rotational phase angle θ is as follows.

[Formula 18]

$$P_r = \omega_{est} \cdot \frac{L_d}{v_h} n \cdot i_{dc} \cdot i_{qc} \ge P_m \quad \cdot \cdot \cdot \quad (2\,4)$$

It suffices that the determination part 60 calculates the threshold Pr satisfying the expression (24) successively or in advance and compares the power Pm with the threshold Pr. The high-frequency voltage vh is thus superimposed on the voltage instruction vdc* when the power Pm is smaller than the threshold Pr.

The power Pm can be computed using the following formula instead of the expression (23).

[Formula 19]

$$P_m = V_{dc} i_{dc} + V_{qc} i_{qc} \quad \cdot \cdot \cdot \quad (2\,5)$$

The high-frequency wave superimposer 30 can alternatively switch whether to perform the high-frequency wave superimposition based on the voltage amplitude instruction Vdqc* of the SynRM 1. In this case, the voltage instructions vdc* and vqc* instead of the torque instruction T* and the estimation angular velocity ωest are input to the high-frequency wave superimposer 30.

As illustrated in FIG. 13, the determination part 60 can calculate the voltage amplitude instruction Vdqc* of the SynRM 1 based on the voltage instructions vdc* and vqc*, compare the voltage amplitude instruction Vdqc* with a threshold Vr, and determine that the load is small when Vdqc*<Vr. The high-frequency voltage vh is thus superimposed on the voltage instruction vqc* when the voltage amplitude instruction Vdqc* is smaller than the threshold Vr.

In this way, when the load is small, the high-frequency wave superimposer 30 superimposes the high-frequency voltage vh on the voltage instruction vdc*, whereby the extended induced voltage Ex can be increased and the estimation accuracy of the angular velocity ω and the rotational phase angle θ using the extended induced voltage Ex can be improved.

Details of the high-frequency wave detector 51 in the estimator 28 are explained below. As described above, the high-frequency wave superimposer 30 superimposes the high-frequency voltage vh on the voltage instruction vqc* when the load of the SynRM 1 is small. The estimator 28 calculates the error Δθ based on the expression (16) when the high-frequency voltage vh is not superimposed, and calculates the error Δθ based on the expression (20) when the high-frequency voltage vh is superimposed.

As can be understood from the expression (20), when the high-frequency voltage vh is superimposed, the current derivative terms pidc and piqc are necessary to calculate the error Δθ. The high-frequency wave detector 51 calculates these current derivative terms pidc and piqc. The estimator 28 substitutes the current derivative terms pidc and piqc calculated by the high-frequency wave detector 51 into the expression (20) to calculate the error Δθ.

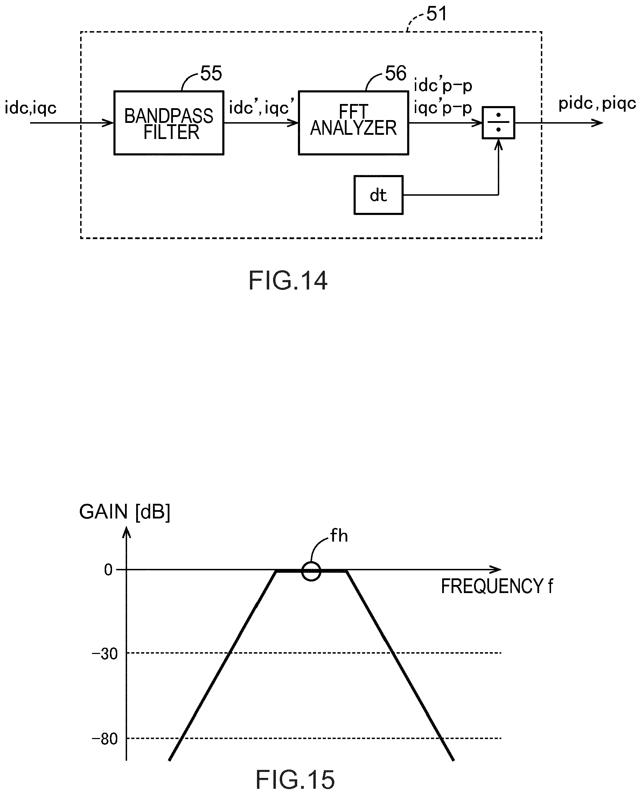

FIG. 14 is a diagram illustrating a configuration of the high-frequency wave detector 51. As illustrated in FIG. 14, the high-frequency wave detector 51 includes a bandpass filter 55 and an FFT analyzer 56.

The bandpass filter 55 passes frequency components in a predetermined range including a frequency fh of the high-frequency voltage vh among the input currents idc and iqc to attenuate frequency components out of the range as illustrated in FIG. 15. The bandpass filter 55 thus detects high-frequency currents idc' and iqc' having the frequency fh from the currents idc and iqc. The high-frequency currents idc' and iqc' output from the bandpass filter 55 are input to the FFT analyzer 56.

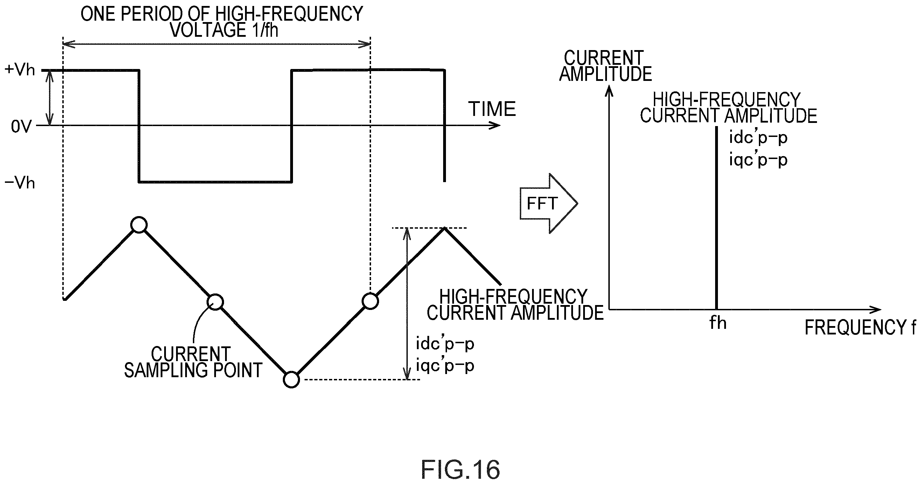

The FFT analyzer 56 calculates amplitudes idc'p-p and iqc'p-p of the high-frequency currents idc' and iqc' detected by the bandpass filter 55, respectively. For example, as illustrated in FIG. 16, the FFT analyzer 56 performs sampling of the high-frequency currents idc' and iqc' four times in one period (=1/fh) of the high-frequency voltage vh and calculates the amplitudes idc'p-p and iqc'p-p from sampled four current values, respectively.

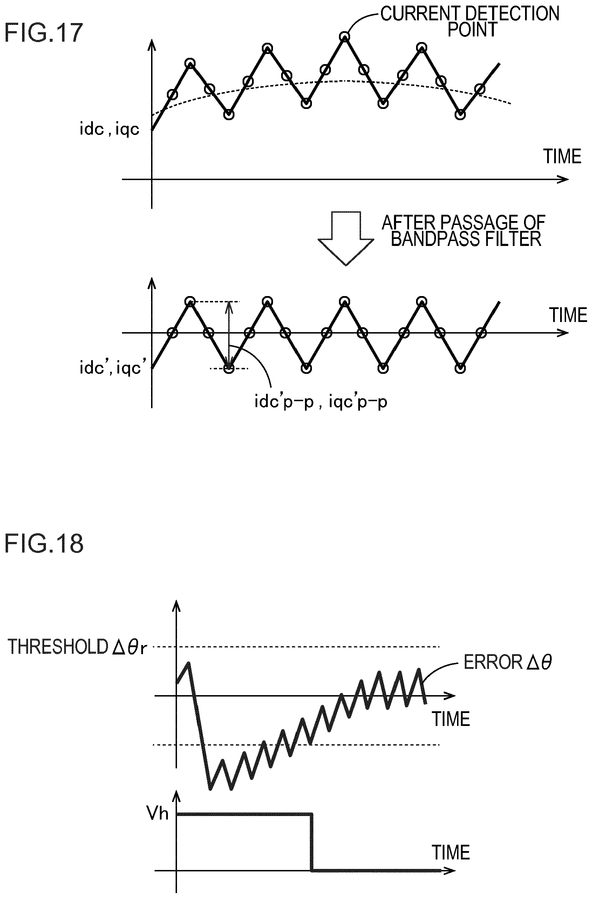

Undesired frequency components are eliminated by the bandpass filter 55 from the high-frequency currents idc' and iqc'. Therefore, the FFT analyzer 56 can accurately calculate the amplitudes idc'p-p and iqc'p-p as illustrated in FIG. 17.

The high-frequency wave detector 51 divides the amplitudes idc'p-p and iqc'p-p calculated by the FFT analyzer 56 by a sampling period dt to calculate the current derivative terms pidc and piqc, respectively.

As explained above, the inverter control device 2 according to the present embodiment superimposes the high-frequency voltage vh on the voltage instruction vqc* when the load of the SynRM 1 is small. Accordingly, even when the load of the SynRM is small and the induced voltage occurring due to an interlinkage magnetic flux is low, the extended induced voltage Ex can be increased and the rotational phase angle θ and the angular velocity ω of the SynRM 1 can be accurately estimated using the extended induced voltage Ex. Therefore, the instability of the control or the step-out of the SynRM 1 can be suppressed.

In the above explanations, the case where the inverter control device 2 controls the operation of the SynRM 1 has been explained. However, the inverter control device 2 can alternatively be used as a control device for a PMSM or a winding field synchronous machine that supplies a field magnetic flux with a secondary winding.

Furthermore, the inverter control device 2 can superimpose the high-frequency voltage vh on the voltage instruction vqc* or can superimpose a high-frequency current on the current instruction idc* or iqc*. Because the extended induced voltage Ex can be increased in any of the cases, the effect described above can be achieved.

Further, the high-frequency wave superimposer 30 can alternatively switch whether to perform the high-frequency wave superimposition based on the error Δθ of the rotational phase angle of the SynRM 1. In this case, the error Δθ calculated by the estimator 28 instead of the torque instruction T* and the estimation angular velocity ωest is input to the high-frequency wave superimposer 30.

The determination part 60 can compare the error Δθ with a threshold Δθr and determine that the load is small when |Δθ| >Δθr. Accordingly, as illustrated in FIG. 18, the high-frequency voltage vh is superimposed on the voltage instruction vqc* when the error Δθ is larger than the threshold Δθr.

In the sensorless control, the error Δθ of the rotational phase angle is controlled to be closer to zero. By performing the high-frequency wave superimposition when the error Δθ exceeds the threshold, the phase angle error can be caused to easily converge to zero and thus the instability of the control on the SynRM 1 or the step-out thereof can be suppressed.

The inverter control device 2 can be applied not only to the sensorless control using the extended induced voltage Ex but also to sensorless control using an observer or PWM harmonic.

The inverter control device 2 can alternatively control the SynRM 1 in a current sensorless manner without including the current detectors 22. Also in this case, an identical effect is achieved.

(Modification of first embodiment)

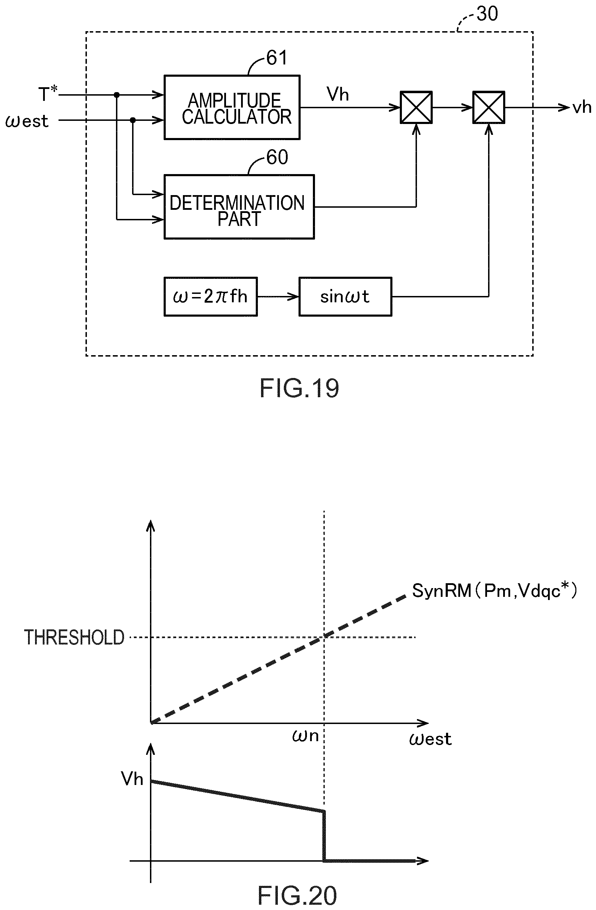

A modification of the high-frequency wave superimposer 30 according to the first embodiment is explained next with reference to FIGS. 19 to 21. The high-frequency wave superimposer 30 changes an amplitude Vh of the high-frequency voltage vh to be superimposed according to the load of the SynRM 1. FIG. 19 is a diagram illustrating a configuration of the high-frequency wave superimposer 30 according to the modification. As illustrated in FIG. 19, the high-frequency wave superimposer 30 further includes an amplitude calculator 61.

The amplitude calculator 61 calculates the amplitude Vh of the high-frequency voltage vh based on the power Pm or the voltage amplitude instruction Vdqc* of the SynRM 1. The amplitude calculator 61 calculates the amplitude Vh in such a manner that the amplitude Vh becomes larger as the power Pm or the voltage amplitude instruction Vdqc* of the SynRM 1 is smaller.

For example, when the determination part 60 performs the determination using the power Pm of the SynRM 1, the amplitude calculator 61 calculates the amplitude Vh using the following expression based on the torque instruction T* and the estimation angular velocity ωest as illustrated in FIG. 19.

[Formula 20]

$$V_h = \omega_{est} \cdot \frac{L_d}{P_m} \cdot n \cdot \left| i_d \cdot i_q \right| \quad \cdot \cdot \cdot (26)$$

Accordingly, as illustrated in FIG. 20, the amplitude Vh is larger as the power Pm is smaller. The value of the amplitude Vh can be determined to satisfy a relation represented by the expression (24).

When the amplitude Vh of the high-frequency voltage vh is changed using the voltage amplitude instruction Vdqc*, the amplitude calculator 61 can alternatively calculate the amplitude Vh using the following expression.

[Formula 21]

$$V_h = n \sqrt{\left( \frac{V_{dq}}{\omega_{est} \cdot i_d} \right)^2 + \left( L_q \frac{i_q}{i_d} \right)^2} \quad \cdot \cdot \cdot (27)$$

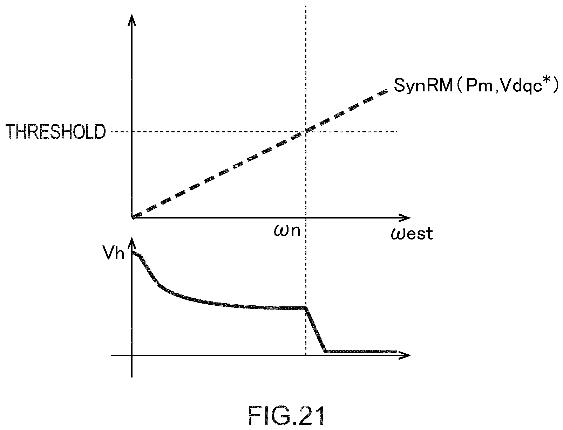

Accordingly, when a certain current is carried, the amplitude Vh decreases in inverse proportional to the estimation angular velocity ωest without depending on the voltage amplitude instruction Vdqc* and has characteristics as illustrated in FIG. 21.

This configuration enables the inverter control device 2 to vary the high-frequency voltage vh to be superimposed using the relation of the estimation angular velocity ωest and the extended induced voltage Ex.

The high-frequency wave superimposer 30 can change the frequency fh of the high-frequency voltage vh according to the load of the SynRM 1. The high-frequency wave superimposer 30 can alternatively change the amplitude Vh according not only to the power Pm or the voltage amplitude instruction Vdqc* but also to the estimation angular velocity ωest or the torque instruct T*.

(Second embodiment)

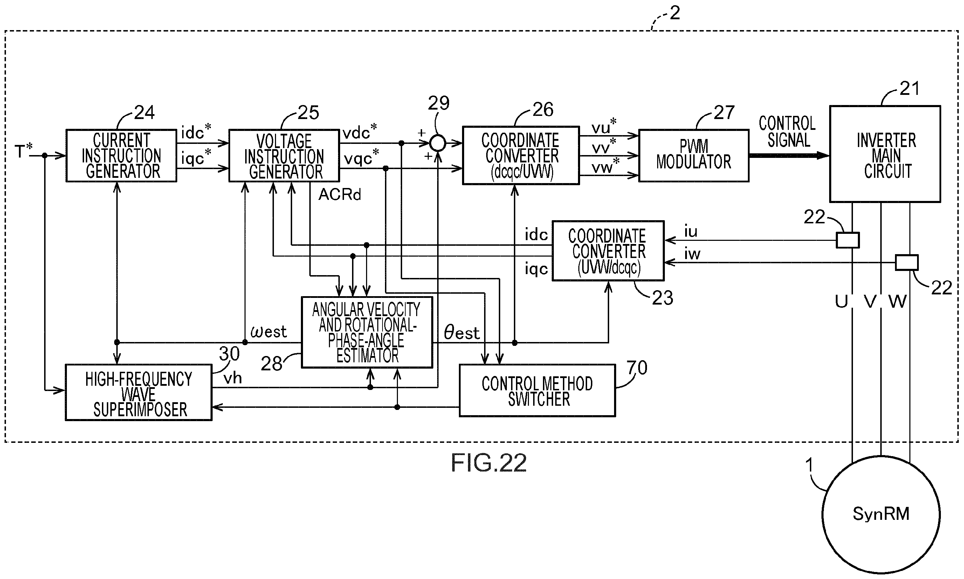

The inverter control device 2 according to a second embodiment is explained next with reference to FIGS. 22 to 26. The inverter control device 2 according to the present embodiment uses two methods of estimating the rotational phase angle θ and the angular velocity ω and switches between these estimation methods according to the load of the SynRM 1.

FIG. 22 is a diagram illustrating a configuration of a motor drive system according to the present embodiment. As illustrated in FIG. 22, the inverter control device 2 according to the present embodiment further includes a control method switcher 70. A difference from the first embodiment is explained below.

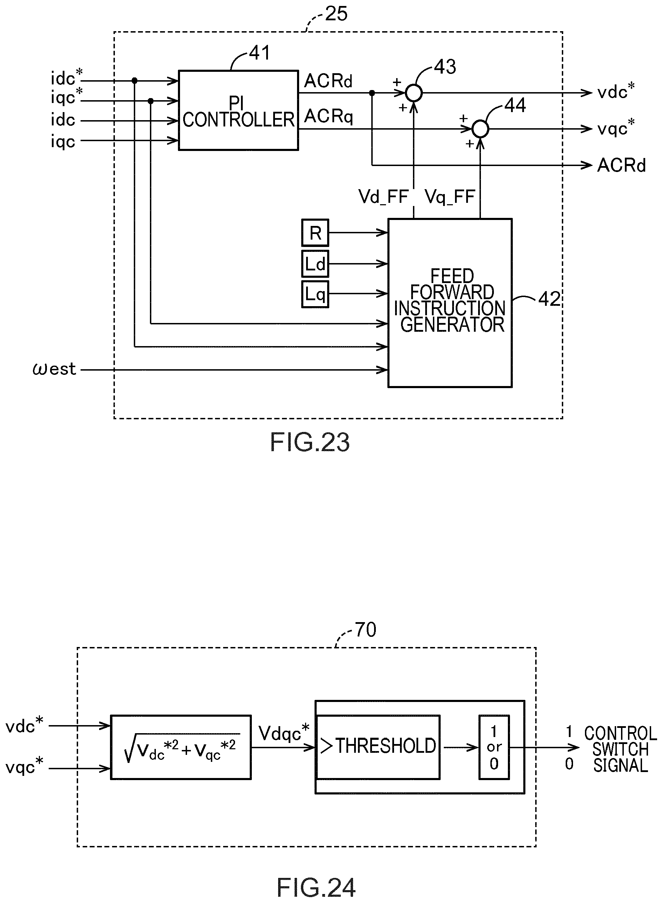

The voltage instruction generator 25 outputs the voltage ACRd as well as the voltage instructions vdc* and vqc* as illustrated in FIG. 23. The voltage ACRd output from the voltage instruction generator 25 is input to the estimator 28.

The control method switcher 70 outputs a binary control switch signal according to the voltage amplitude instruction Vdqc* or the power Pm of the SynRM 1. In the present embodiment, control methods such as the estimation method for the rotational phase angle θ and the angular velocity ω are switched by the control switch signal. It is assumed hereinafter that the control method switcher 70 outputs zero (0) when the voltage amplitude instruction Vdqc* or the power Pm is small, and outputs 1 when the voltage amplitude instruction Vdqc* or the power Pm is large.

As illustrated in FIG. 24, the control method switcher 70 can calculate the voltage amplitude instruction Vdqc* of the SynRM 1 based on the voltage instructions vdc* and vqc* and compare the voltage amplitude instruction Vdqc* with the threshold Vr to determine that the load is small when Vdqc*<Vr.

Alternatively, the control method switcher 70 can calculate the power Pm of the SynRM 1 based on the torque instruction T* and the estimation angular velocity ωest and compare the power Pm with the predetermined threshold Pr to determine that the load is small when Pm<Pr.

The control method switcher 70 can alternatively compare the estimation angular velocity ωest with a predetermined threshold ωr to determine that the high-frequency voltage vh is to be superimposed when ωest<ωr.

The control switch signal is input from the control method switcher 70 to the high-frequency wave superimposer 30. The high-frequency wave superimposer 30 outputs the high-frequency voltage vh when zero (0) is input thereto as the control switch signal, and does not output the high-frequency voltage vh when 1 is input thereto as the control switch signal. The high-frequency voltage vh output by the high-frequency wave superimposer 30 is input to the estimator 28 and the adder 29.

The adder 29 adds the voltage instruction vdc* and the high-frequency voltage vh and inputs a result of the addition to the coordinate converter 26. Accordingly, the high-frequency voltage vh is superimposed on the voltage instruction vdc*.

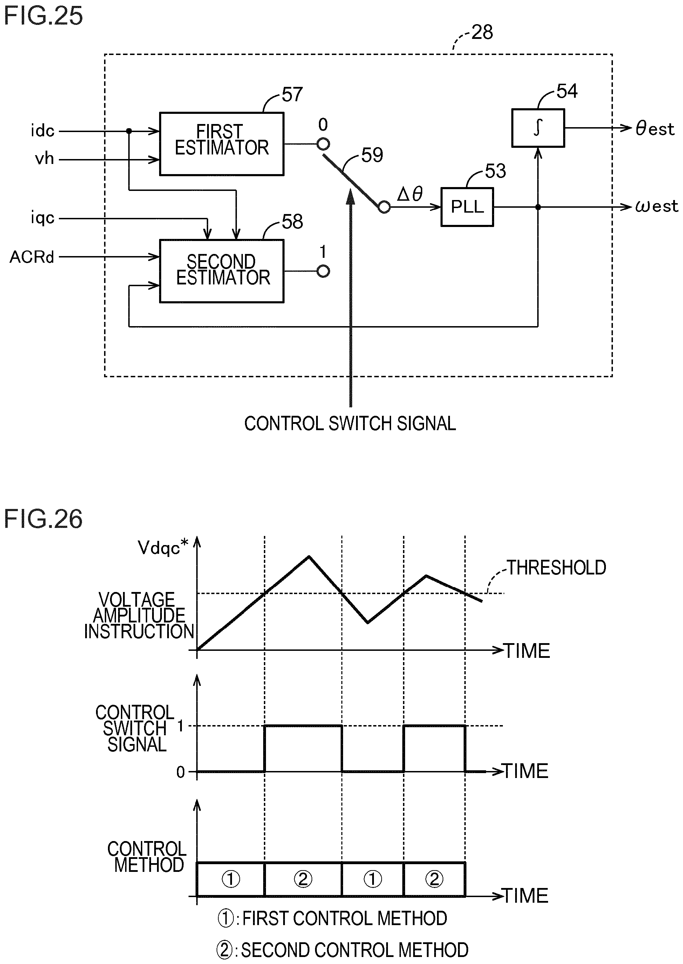

The estimator 28 includes the PLL controller 53, the integrator 54, a first estimator 57, a second estimator 58, and a switch 59 as illustrated in FIG. 25. The first estimator 57 and the second estimator 58 calculate the error Δθ by different methods, respectively.

The first estimator 57 calculates the error Δθ based on the high-frequency voltage vh and the current idc. When the high-frequency voltage vh is superimposed on the voltage instruction vdc*, the current derivative term pidc is represented by the following expression.

[Formula 22]

$$pi_{dc} = \frac{L_1 \sin 2\Delta\theta}{L_d L_q} v_h \quad \cdot \cdot \cdot (28)$$

When the error Δθ is sufficiently small, the error Δθ is represented by the following expression based on the expression (28).

[Formula 23]

$$\Delta\theta = \frac{L_d L_q}{(L_d - L_q)v_h} p i_{dc} \quad \cdots (2\,9)$$

The first estimator 57 calculates the error $\Delta\theta$ based on the expression (29).

The second estimator 58 calculates the error $\Delta\theta$ using a relation of the voltage ACRd output by the PI controller 41 and the feedforward voltages Vd_FF and Vq_FF. Specifically, the second estimator 58 calculates the error $\Delta\theta$ based on the currents idc and iqc and the voltage ACRd.

When the error $\Delta\theta$ occurs, the feedforward voltages Vd_FF and Vq_FF are represented by the following expression based on the expression (2).

[Formula 24]

$$\begin{bmatrix} ACR_d \\ ACR_q \end{bmatrix} = \begin{bmatrix} v_{dc}{}^* - v_{d\_FF} \\ v_{qc}{}^* - v_{q\_FF} \end{bmatrix} = \left\{ \begin{bmatrix} 0 & -\omega_{est} L_1 \\ -\omega_{est} L_1 & 0 \end{bmatrix} \begin{bmatrix} i_{dc} \\ i_{qc} \end{bmatrix} + \omega_{est} L_1 \begin{bmatrix} -\sin 2\Delta\theta & \cos 2\Delta\theta \\ \cos 2\Delta\theta & \sin 2\Delta\theta \end{bmatrix} \begin{bmatrix} i_{dc} \\ i_{qc} \end{bmatrix} \right\} \cdots (3\,0)$$

When attention is focused on a dc-axis component of the expression (30), the following expression holds.

[Formula 25]

$$\Delta v_{dc}{}^* = -\omega_{est} L_1 \sin 2\Delta\theta i_{dc} + \omega_{est} L_1 (1 - \cos 2\Delta\theta) i_{qc} \quad \cdots (3\,1)$$

When the error $\Delta\theta$ is sufficiently small, the error $\Delta\theta$ is represented by the following expression based on the expression (31).

[Formula 26]

$$\Delta\theta = \frac{-ACR_d}{\omega_{est} L_1 i_{dc}} \quad \cdots (3\,2)$$

The second estimator 58 calculates the error $\Delta\theta$ based on the expression (32).

The switch 59 switches the error $\Delta\theta$ to be input to the PLL controller 53 according to the control switch signal. The switch 59 inputs the error $\Delta\theta$ output by the first estimator 57 to the PLL controller 53 when zero (0) is input thereto as the control switch signal. The switch 59 inputs the error $\Delta\theta$ output by the second estimator 58 to the PLL controller 53 when 1 is input thereto as the control switch signal.

The PLL controller 53 executes PLL control on the error $\Delta\theta$ and calculates the estimation angular velocity ωest. The integrator 54 integrates the estimation angular velocity d ωest and calculates the estimation rotational phase angle θest.

As explained above, the inverter control device 2 according to the present embodiment controls the SynRM 1 using the two control methods including a first control method of estimating the rotating phase using a harmonic current generated by superimposing the high-frequency voltage vh and a second control method of estimating the rotating phase using a voltage caused by an interlinkage magnetic flux as illustrated in FIG. 26.

In the first control method, the inverter control device 2 superimposes the high-frequency voltage vh on the voltage instruction vdc*, calculates the error $\Delta\theta$ based on the voltage instruction vdc* having the high-frequency voltage vh superimposed thereon, and estimates the rotational phase angle θ and the angular velocity ω based on the error $\Delta\theta$. This enables the inverter control device 2 to increase the extended induced voltage Ex and improve the estimation accuracy of the rotational phase angle θ and the angular velocity ω.

In the second control method, the inverter control device 2 estimates the rotational phase angle θ and the angular velocity ω without superimposing the high-frequency voltage vh on the voltage instruction vdc*. This enables the inverter control device 2 to reduce torque ripple, and unwanted sound, noise, and high-frequency loss caused by the torque ripple.

Any method not using the high-frequency voltage vh can be arbitrarily used as the calculation method of the error $\Delta\theta$ performed by the second estimator 58. For example, the second estimator 58 can calculate the error $\Delta\theta$ using an observer or the voltages ACRd and ACRq.

Furthermore, the control method switcher 70 can be configured to prevent the control switch signal from being frequently changed by a hysteresis operation.

While certain embodiments have been described, these embodiments have been presented by way of example only, and are not intended to limit the scope of the inventions. Indeed, the novel methods and systems described herein may be embodied in a variety of other forms; furthermore, various omissions, substitutions and changes in the form of the methods and systems described herein may be made without departing from the spirit of the inventions. The accompanying claims and their equivalents are intended to cover such forms or modifications as would fall within the scope and spirit of the inventions.

## Claims

1. An inverter control device comprising:

    an inverter main circuit electrically connectable to a predetermined rotational drive target;
    a current instruction generator generating a current instruction;
    a voltage instruction generator generating a voltage instruction causing a current output from the inverter main circuit to be equal to the current instruction;
    an estimator calculating an estimation rotational phase angle of the rotational drive target; and
    a high-frequency wave superimposer superimposing a high-frequency wave on the current instruction or the voltage instruction according to a relation between a feature amount of the rotational drive target and a threshold.

2. The device of Claim 1, wherein the feature amount is power of the rotational drive target.

3. The device of Claim 1, wherein the feature amount is a voltage amplitude instruction for the rotational drive target.

4. The device of Claim 2, wherein the high-frequency wave superimposer superimposes the high-frequency wave when the power is smaller than a predetermined threshold.

5. The device of Claim 3, wherein the high-frequency wave superimposer superimposes the high-frequency wave when the voltage amplitude instruction is smaller than a predetermined threshold.

6. The device of any one of Claims 1 to 5, wherein the high-frequency wave superimposer superimposes the high-frequency wave when an error of the estimation rotational phase angle is larger than a predetermined threshold.

7. The device of any one of Claims 1 to 6, wherein the high-frequency wave superimposer changes an amplitude of the high-frequency wave according to a magnitude of the feature amount.

8. The device of any one of Claims 1 to 7, wherein the estimator calculates the estimation rotational phase angle using an extended induced voltage.

9. The device of any one of Claims 1 to 8, wherein
the estimator comprises:

    a first estimator calculating the estimation rotational phase angle based on the high-frequency wave; and
    a second estimator calculating the estimation rotational phase angle by a method different from that of the first estimator.

10. The device of Claim 9, wherein the inverter main circuit is controlled using the estimation rotational phase angle calculated by the first estimator when power of the rotational drive target is smaller than a predetermined threshold.

11. The device of Claim 9, wherein the inverter main circuit is controlled using the estimation rotational phase angle calculated by the first estimator when a voltage amplitude instruction for the rotational drive target is smaller than a predetermined threshold.

12. A motor drive system comprising:

    a motor;
    an inverter main circuit connected to the motor;

a current instruction generator generating a current instruction;

a voltage instruction generator generating a voltage instruction causing a current output from the inverter main circuit to be equal to the current instruction;

an estimator calculating an estimation rotational phase angle of the motor; and

a high-frequency wave superimposer superimposing a high-frequency wave on the current instruction or the voltage instruction according to a relation between a feature amount of the motor and a threshold.

FIG.1

FIG.2

$$\sqrt{\dfrac{T^*}{0.5 \cdot Pp \cdot (Ld-Lq)\sin 2\beta}}$$

$$\begin{bmatrix} \cos\beta & -\sin\beta \\ \sin\beta & \cos\beta \end{bmatrix}$$

FIG.3

FIG.4

FIG.5

FIG.6

$$-\tan^{-1}\left\{\frac{\{vdc-(R+pLd)idc+\omega \cdot Lq\cdot iqc\}}{\{vqc-\omega \cdot Lq\cdot idc-(R+pLd)iqc\}}\right\}$$

R
Ld
Lq

vdc*
vqc*
idc
iqc

Δθ

PLL

∫

θest

ωest

pidc piqc

HIGH-FREQUENCY
WAVE DETECTOR

28

52

54

53

51

FIG.7

FIG.8

TORQUE

T1

PMSM(Pm,Vdqc*)

SynRM(Pm,Vdqc*)

ωn ωest

Vh

CHARACTERISTICS AT TIME OF LARGE LOAD

FIG.9

TORQUE

PMSM(Pm,Vdqc*)

SynRM(Pm,Vdqc*)

T2

ωn ωest

Vh

CHARACTERISTICS AT TIME OF SMALL LOAD

THRESHOLD ┄┄┄┄┄┄┄┄┄┄┄┄┄┄┄┄┄┄┄┄

SynRM（Pm,Vdqc*）

$\omega$n

$\omega$est

Vh

FIG.10

$\overset{-30}{\phantom{x}}$

Vh

vh

$\overset{60}{\phantom{x}}$

T*

$\omega$est

DETERMINATION PART

$\omega=2\pi$fh

sin$\omega$t

FIG.11

FIG.12

FIG.13

FIG.14

FIG.15

ONE PERIOD OF HIGH-FREQUENCY
VOLTAGE 1/fh

+Vh

0V ................ TIME

−Vh

FFT ⟹

CURRENT
AMPLITUDE

HIGH-FREQUENCY
CURRENT AMPLITUDE
idc'p−p
iqc'p−p

fh    FREQUENCY f

CURRENT
SAMPLING POINT

HIGH-FREQUENCY
CURRENT AMPLITUDE

idc'p−p
iqc'p−p

FIG.16

FIG.17

CURRENT DETECTION
POINT

idc , iqc

TIME

AFTER PASSAGE OF
BANDPASS FILTER

idc', iqc'

TIME

idc'p-p , iqc'p-p

FIG.18

THRESHOLD $\Delta\theta r$

ERROR $\Delta\theta$

TIME

Vh

TIME

26

FIG.19

FIG.20

THRESHOLD

SynRM(Pm,Vdqc*)

$\omega$n

$\omega$est

Vh

FIG.21

FIG.22

FIG.23

FIG.24

FIG.25

CONTROL SWITCH SIGNAL

FIG.26

①: FIRST CONTROL METHOD

②: SECOND CONTROL METHOD

**INTERNATIONAL SEARCH REPORT**

International application No.

PCT/JP2015/084540

A. CLASSIFICATION OF SUBJECT MATTER
*H02P25/08*(2016.01)i, *H02P6/18*(2016.01)i

According to International Patent Classification (IPC) or to both national classification and IPC

B. FIELDS SEARCHED

Minimum documentation searched (classification system followed by classification symbols)
H02P25/08, H02P6/18

Documentation searched other than minimum documentation to the extent that such documents are included in the fields searched
Jitsuyo Shinan Koho        1922–1996   Jitsuyo Shinan Toroku Koho   1996–2016
Kokai Jitsuyo Shinan Koho   1971–2016   Toroku Jitsuyo Shinan Koho   1994–2016

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X | WO 2014/157628 A1  (Aisin AW Co., Ltd.), | 1,8–9,12 |
| Y | 02 October 2014 (02.10.2014), | 7 |
| A | paragraphs [0059] to [0065]; fig. 1 | 2–6,10–11 |
| | & US 2015/0357956 A1 | |
| | paragraphs [0057] to [0063]; fig. 1 | |
| | & CN 105027422 A | |
| Y | JP 2007-185080 A  (Yugen Kaisha C & S Kokusai Kenkyusho), 19 July 2007 (19.07.2007), claim 2; paragraphs [0055] to [0056]; fig. 2 to 3 (Family: none) | 7 |

☒ Further documents are listed in the continuation of Box C.   ☐ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 02 March 2016 (02.03.16) | 15 March 2016 (15.03.16) |

| Name and mailing address of the ISA/ | Authorized officer |
|---|---|
| Japan Patent Office 3-4-3,Kasumigaseki,Chiyoda-ku, Tokyo 100-8915,Japan | |
| | Telephone No. |

Form PCT/ISA/210 (second sheet) (January 2015)

**INTERNATIONAL SEARCH REPORT**

International application No.

PCT/JP2015/084540

C (Continuation).   DOCUMENTS CONSIDERED TO BE RELEVANT

| Category* | Citation of document, with indication, where appropriate, of the relevant passages | Relevant to claim No. |
|---|---|---|
| A | JP 2014-39414 A  (Yaskawa Electric Corp.), 27 February 2014 (27.02.2014), claim 1; fig. 1, 6 & US 2014/0049202 A1 claim 1; fig. 1, 6 & EP 2698916 A2          & CN 103595326 A & KR 10-2014-0023203 A | 1-12 |
| A | WO 2010/073865 A1  (Aisin AW Co., Ltd.), 01 July 2010 (01.07.2010), claims 1 to 5; fig. 2 to 4 & JP 2010-154597 A      & US 2010/0156334 A1 claims 1 to 5; fig. 2 to 4 & CN 102124644 A | 7-11 |

Form PCT/ISA/210 (continuation of second sheet) (January 2015)